# EUROPÄISCHE PATENTANMELDUNG

(11) **EP 1 193 578 A1**
(43) Veröffentlichungstag der Anmeldung: **03.04.2002**
(21) Anmeldenummer: 00810860.7
(22) Anmeldetag: 21.09.2000
(51) Int. Cl.: G05B 19/042

(54) **Repräsentation eines Messereignisses eines Leitsystems**

(71) Anmelder: ABB RESEARCH LTD., 8050 Zürich (CH)
(72) Erfinder: Beeler, Erich, 5405 Baden-Dättwil (CH)
(74) Vertreter: ABB Patent Attorneys

(57) **Zusammenfassung**

Ein Messereignis eines Leitsystems wird durch ein Ereignisobjekt (1) repräsentiert, wobei das Ereignisobjekt (1) Messdaten (12) des Messereignisses speichert und Mittel (3,4,5) zur Verarbeitung und Weitergabe dieser gespeicherten Daten (13) aufweist. Diese Mittel (3,4,5) zur Verarbeitung und Weitergabe der Messdaten umfassen beispielsweise Methoden respektive Mittel zur Interpolation (4) und/oder zur Visualisierung (5) von Messdaten.

In einer bevorzugten Ausführungsform der Erfindung werden die Messdaten komprimiert und umfassen die Mittel zur Verarbeitung der Messdaten Mittel (3) zur Dekompression der komprimierten Messdaten. Dadurch verringert sich ein Aufwand für eine Übertragung und allfällige Speicherung der Messdaten in einer für einen Empfänger (15) transparenten Weise.

## Beschreibung

### Technisches Gebiet

Die Erfindung bezieht sich auf das Gebiet der Automatisierungstechnik. Sie bezieht sich auf ein Verfahren und ein Computerprogrammprodukt zur Repräsentation eines Messereignisses eines Leitsystems gemäss dem Oberbegriff der Patentansprüche 1 beziehungsweise 7.

### Stand der Technik

In einem Leitsystem zur Steuerung und Überwachung einer technischen Anlage werden zwischen einzelnen Geräten des Leitsystems Daten ausgetauscht. Solche Daten lassen sich im wesentlichen als Echtzeit-Prozessdaten und als Ereignisdaten klassifizieren. Ereignisdaten gehen auf Ereignisse in der technischen Anlage zurück, wie zum Beispiel das Ansprechen eines Schalters oder das Erfassen einer Reihe von Messwerten. Messdaten, die in dieser Weise mit einem Ereignis oder Messereignis verknüpft sind, werden von einem Erzeuger durch das Leitsystem übermittelt und meist an einer physikalisch und/oder logisch anderen Stelle des Leitsystems durch einen Empfänger weiterverarbeitet. Dadurch müssen sowohl der Erzeuger wie auch der Empfänger über Eigenarten der Messdaten informiert sein. Werden bestimmte Eigenarten der Messdaten, beispielsweise eine Codierung oder eine zeitliche Auflösung geändert, so müssen sowohl ein erzeugendes wie auch ein empfangendes Gerät oder Programm angepasst werden. Dadurch können Inkonsistenzen auftreten und die Programmierung und Wartung des Leitsystems werden erschwert.

### Darstellung der Erfindung

Es ist deshalb Aufgabe der Erfindung, ein Verfahren und ein Computerprogrammprodukt zur Repräsentation eines Messereignisses eines Leitsystems der eingangs genannten Art zu schaffen, welche die oben genannten Nachteile behebt.

Diese Aufgabe lösen ein Verfahren und ein Computerprogrammprodukt zur Repräsentation eines Messereignisses eines Leitsystems mit den Merkmalen der Patentansprüche 1 beziehungsweise 7.

Erfindungsgemäss wird ein Messereignis eines Leitsystems durch ein Ereignisobjekt repräsentiert, wobei das Ereignisobjekt Messdaten des Messereignisses speichert und Mittel zur Verarbeitung und Weitergabe dieser gespeicherten Daten aufweist.

Diese Mittel zur Verarbeitung und Weitergabe der Messdaten umfassen beispielsweise Methoden respektive Mittel zur Interpolation und/oder Methoden zur Visualisierung von Messdaten.

Da ein Ereignisobjekt neben Messdaten auch Methoden zur Verarbeitung der Messdaten enthält, ist es nicht mehr erforderlich, dass ein Empfänger von Ereignisinformation Kenntnis über alle Eigenarten der Messdaten haben muss. Dadurch wird eine Programmierung des Leitsystems vereinfacht und zuverlässiger.

In einer bevorzugten Ausführungsform der Erfindung werden die Messdaten komprimiert und umfassen die Mittel zur Verarbeitung der Messdaten Mittel zur Dekompression der komprimierten Messdaten. Dadurch verringert sich ein Aufwand für eine Übertragung und allfällige Speicherung der Messdaten in einer für den Empfänger transparenten Weise.

In einer weiteren bevorzugten Ausführungsform der Erfindung weist das Ereignisobjekt Mittel auf, um die Messdaten dem Empfänger mit einer vom Empfänger vorgegebenen Auflösung zu liefern.

Weitere bevorzugte Ausführungsformen gehen aus den abhängigen Patentansprüchen hervor.

### Kurze Beschreibung der Zeichnungen

Im folgenden wird die Erfindung anhand eines bevorzugten Ausführungsbeispiels, welches in den beiliegenden Zeichnungen dargestellt ist, näher erläutert. Es zeigen:
- Figur 1: schematisch eine Übermittlung eines erfindungsgemässen Ereignisobjekts; und
- Figur 2: schematisch eine Struktur eines erfindungsgemässen Ereignisobjekts.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

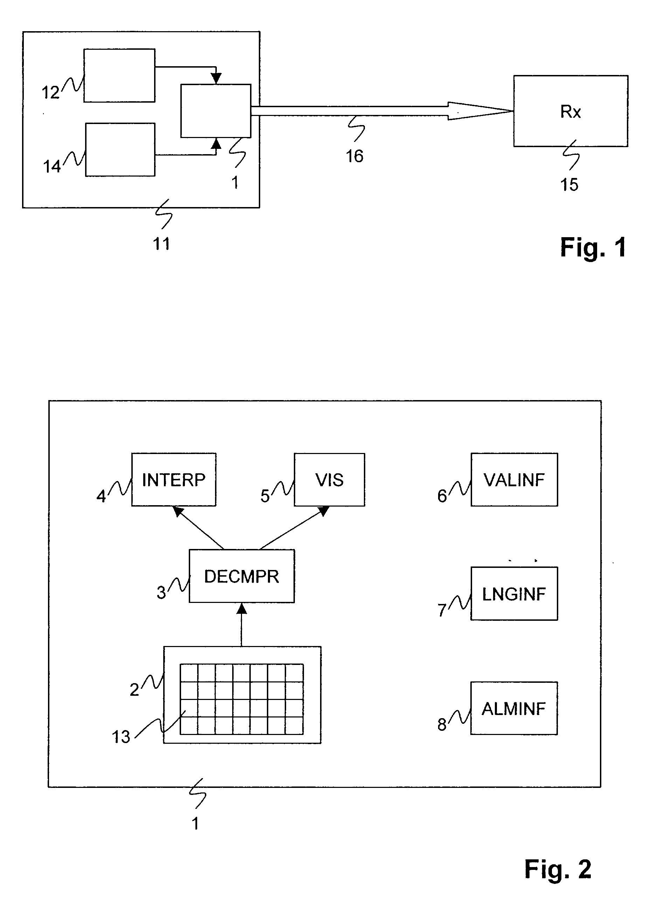

Figur 1 zeigt schematisch eine Erzeugung und Übermittlung 16 eines erfindungsgemässen Ereignisobjekts 1. Ein Messereignis betrifft beispielsweise Strom-, Spannungs- oder Leistungswerte, Gasdichte, Drehzahl, Temperatur, Röntgenbilder, Schaltverläufe, Störungen etc. Ein Erzeuger 11 eines Ereignisobjekts 1 ist vorzugsweise eine Programmeinheit eines Computerprogramms oder Computerprogrammprodukts. Der Erzeuger 11 ist auf einem Leitsystem speicherbar und wird auf einem Prozessor des Leitsystems ausgeführt. Bei einer Ausführung des Erzeugers 11 anlässlich eines Messereignisses wird ein Messobjekt oder Ereignisobjekt 1 zur Repräsentation des Messereignisses erzeugt. Es werden Messdaten 12 gesammelt und im Ereignisobjekt 1 gespeichert. Das Ereignisobjekt 1 ist ein Objekt im Sinne der objektorientierten Programmierung. Es erhält die Messdaten 12 sowie Kontextdaten 14 der Messung und speichert sie. Das Ereignisobjekt 1 wird in bekannter Weise an einen Empfänger 15 übermittelt 16. Der Empfänger 15 ist ein anderes Leitsystemgerät respektive eine auf einem Leitsystemgerät ausgeführte Programmeinheit. Der Empfänger 15 dient beispielsweise einer Sammlung und/oder Analyse von Messdaten, einer Alarmierung eines Benutzers oder einer graphischen oder textuellen Darstellung von Messdaten für den Benutzer. Die Übermittlung geschieht mittels geeigneter Kommunikationsmittel, beispielsweise mittels sogenannter "Middleware" wie dem bekannten Java Message Service (JMS).

Figur 2 zeigt schematisch eine Struktur eines erfindungsgemässen Ereignisobjekts 1. Das Ereignisobjekt 1 weist ein Speichermittel 2, beispielsweise einen Satz ("Array") von Bytes, auf. Im Speichermittel sind die Messdaten 12 als Speicherdaten 13 gespeichert. Das Ereignisobjekt 1 weist ein Kompressionsmittel zur Kompression der Messdaten 12 vor der Speicherung mittels eines Kompressionsalgorithmus auf, so dass die Speicherdaten 13 komprimierte Messdaten 12 sind. Das Ereignisobjekt 1 weist ein Dekompressionsmittel 3 zur Wiederherstellung der Messdaten 12 aus den Speicherdaten 13, ein Interpolationsmittel 4, ein Visualisierungsmittel 5, eine Gültigkeitsinformation 6, eine Sprachinformation 7 und eine Alarminformation 8 auf. Diese Mittel und Informationen dienen einer Verarbeitung der Messdaten 12 respektive Speicherdaten 13 für den Empfänger 15 sowie einer Weitergabe der Messdaten 12 an den Empfänger 15.

Die folgende Tabelle zeigt eine Beschreibung eines Ereignisobjekts 1 durch eine UML (Unified Modeling Language) Klassendarstellung, basierend auf einer Java-Syntax. Es wird darin eine Klasse GenericEvent definiert, sowie eine davon abgeleitete Klasse InfraredSpectrum zur Repräsentation eines Ereignisses mit dem Inhalt eines Infrarot-Messspektrums.

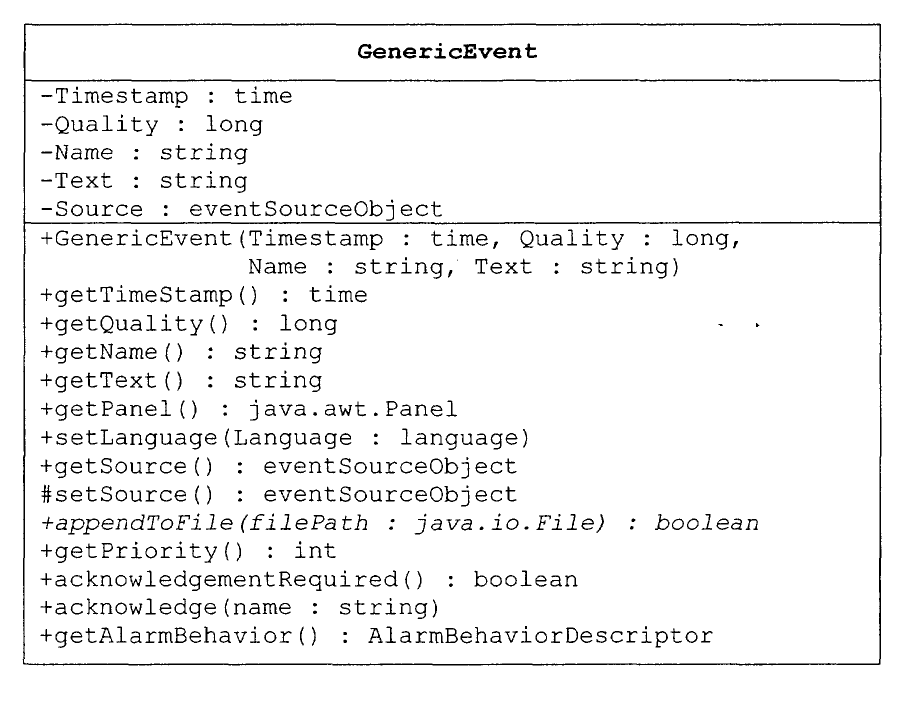

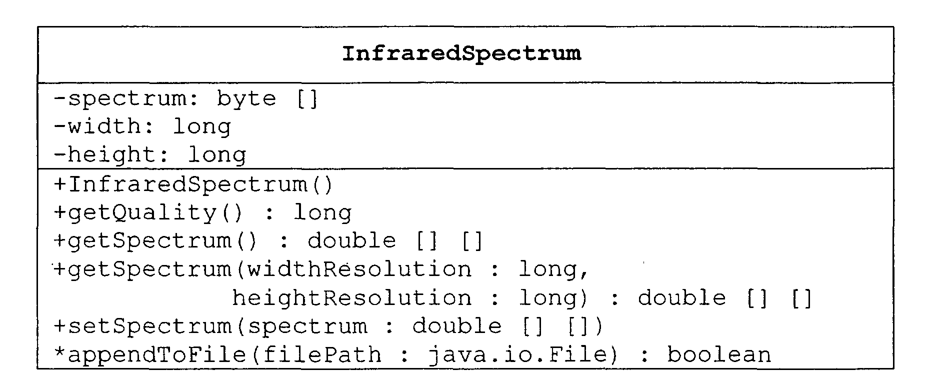

Eine Klasse GenericEvent beschreibt eine Basisklasse für Ereignisse. Sie definiert Zeitstempel, Gültigkeit, Namen, Beschreibungstext und Quelle respektive Erzeuger 11 eines Ereignisses. Diese Eigenschaften sind durch jeweilige Methoden getTimeStamp(), getQuality(), getName(), getText() und getSource() abfragbar. Ein anderes Programmelement, insbesondere ein Empfänger 15 kann also durch Aufruf dieser Methoden auf die entsprechenden Eigenschaften eines Ereignisobjekts 1, welches eine Instanz der Klasse GenericEvent ist, zugreifen.

Eine Methode getPanel() bewirkt eine Darstellung des Ereignisobjektes 1 auf einem visuellen Anzeigegerät. Das Ereignisobjekt 1 weist also selber Mittel zu seiner Darstellung auf einem Bildschirm auf.

Durch eine Methode setLanguage(myLanguage) wird eine Benutzersprache wie Englisch oder Deutsch bestimmt. Dadurch wird ein Rückgabewert einer Prozedur wie beispielsweise getText() nach Massgabe der gewählten Sprache gebildet.

Mit einer Methode setSource() wird die Quelle des Ereignisses neu definiert. Dies geschieht, wenn ein Ereignisobjekt 1 durch mehrere logische Schichten des Leitsystems übermittelt wird, und eine empfangende Schicht bestimmte Details wie eine Quelle des Ereignisses in einer entfernten Schicht nicht kennt.

Eine Methode appendToFile(fileName) ist eine abstrakte Methode, welche Messdaten 12 an eine vorgegebene Datei anfügt. Eine Implementation dieser Methode muss in einer von der Klasse GenericEvent abgeleiteten Klasse definiert werden. Mit einer Methode getPriority() wird eine Priorität eines den Messdaten 12 zugeordneten Alarms abgefragt. Mit einer Methode acknowledgementRequired() wird eine Notwendigkeit einer Quittierung eines Alarms abgefragt. Mit einer Methode acknowledge(myName) wird ein Alarm quittiert. Mit einer Methode getAlarmBehavior() wird ein Verhalten im Alarmfall beschrieben. Beispielsweise ist bei einem Gerätedefekt eine Quittierung durch den Benutzer erforderlich, bei einem Überschreiten eines unkritischen Schwellwertes jedoch nicht.

Die abgeleitete Klasse InfraredSpectrum beschreibt ein Ereignis mit dem Inhalt eines Infrarot-Messspektrums. Die erste Methode getSpectrum() enthält als Rückgabewert einen zweidimensionalen Array, wobei zur Speicheroptimierung die Daten intern im Objekt als Bytearray gespeichert sind. Die zweite Methode getSpectrum(resol 1, resol2) mit Parametern erlaubt es einem Empfänger 15 des Ereignisobjekts 1, eine Auflösung zu fordern, mit der das Spektrum geliefert oder dargestellt werden soll.

Eine Methode appendToFile(fileName) implementiert die gleichnamige abstrakte Methode von GenericEvent und erlaubt eine Langzeitspeicherung von Daten des Ereignisobjekts 1 oder des ganzen Ereignisobjekts. Daten werden vorzugsweise als Bytearray oder in einem "Extended Markup Language" (XML) Format gespeichert. Daten sind durch andere Applikationen lesbar und weiter verarbeitbar.

Beim Ablauf des erfindungsgemässen Verfahrens wird wie oben beschrieben ein Ereignisobjekt 1 zur Repräsentation eines Messereignisses eines Leitsystems erzeugt. Beispielsweise werden einem Ereignisobjekt 1 der Klasse InfraredSpectrum durch die Methode setSpectrum(SpectrumDataArray) Spektrumsdaten übergeben. Besagte Methode komprimiert die Spektrumsdaten und speichert sie in einer für einen Benutzer unsichtbaren Datenstruktur, beispielsweise einem Array von Bytes, als Speicherdaten 13. Das Ereignisobjekt 1 wird dem Empfänger 15 übermittelt. Auf Anfrage des Empfängers 15 verarbeitet das Ereignisobjekt 1 seine Speicherdaten 13 respektive bereitet sie auf und gibt sie dem Empfänger 15 weiter. In einer bevorzugten Variante der Erfindung werden bei der Verarbeitung die Speicherdaten 13 aus dem Speichermittel 2 gelesen und durch das Ereignisobjekt 1 dekomprimiert, so dass sie wiederhergestellten Messdaten 12 entsprechen. Beispielsweise ruft der Empfänger 15 die Methode getSpectrum() auf, welche die Speicherdaten 13 dekomprimiert und dem Empfänger 15 übergibt.

In einer bevorzugten Variante der Erfindung werden bei der Verarbeitung oder Weitergabe der Messdaten die Messdaten durch das Ereignisobjekt (1) interpoliert, so dass sie eine vom Empfänger 15 vorgegebene Auflösung aufweisen. Dies hat den Vorteil, dass ein Wissen, wie eine bestimmte Art von Daten am genauesten und effizientesten zu interpolieren ist, dem Ereignisobjekt 1 respektive den Daten selber zugeordnet ist. Eine solche Interpolation geschieht je nach Art der Messdaten 12 in einem Frequenzbereich und/oder Zeitbereich und/oder Amplitudenbereich. Beispielsweise wird die Methode getSpectrum(100,100) aufgerufen um das Infrarot-Messspektrum mit einer Auflösung von 100 mal 100 Datenpunkten zu erhalten.

In einer bevorzugten Variante der Erfindung wird bei der Weitergabe der Messdaten zumindest ein Teil der Messdaten 12 durch das Ereignisobjekt 1 auf einer Benutzeranzeige dargestellt. Dazu weist das Ereignisobjekt 1 Mittel zur graphischen Darstellung eines Teils oder aller seiner Messdaten 12 auf.

Beispielsweise wird eine Visualisierungsmethode des Ereignisobjekts 1 aufgerufen und stellt eine graphische oder textuelle Repräsentation des Ereignisses auf einem vorgegebenen Bereich eines graphischen Anzeigegeräts dar. Eine graphische Repräsentation ist beispielsweise ein ein- oder zweidimensionales Diagramm mit Messdaten.

In einer bevorzugten Variante der Erfindung wird bei der Weitergabe der Messdaten zumindest ein Teil der Messdaten 12 durch das Ereignisobjekt 1 an eine Datei angefügt. Dabei verwendet das Ereignisobjekt 1 vorzugsweise nur einen Teil der Messdaten 12, welcher für eine Aufzeichnung wichtig ist. Im obigen Beispiel geschieht dies mittels der Methode appendTo-File(fileName).

In einer bevorzugten Variante der Erfindung werden bei einer Ausgabe von Daten durch das Ereignisobjekt 1 die ausgegebenen Daten anhand sprachspezifischer Informationen modifiziert. Beispielsweise wird ein Beschreibungstext durch die Methode getText() in der gewählten Sprache weitergegeben, oder es werden Textelemente einer tabellarischen Darstellung der Messdaten 12 in einer gewählten Sprache ausgegeben.

In einer bevorzugten Ausführungsform der Erfindung weist das Ereignisobjekt 1 Gültigkeitsinformationen 6 auf, das heisst, ein Mittel zu einer Repräsentation und Verarbeitung einer Gültigkeit der Messdaten. Bestimmte Ereignisse verlieren ihre Gültigkeit nach einer gewissen Zeit, so zum Beispiel spezielle Zustände wie Messdaten, welche bereits nach einer kurzen Zeit ungültig werden. Abhängig von einer Beschaffenheit des Ereignisses und der Zeit liefert beispielsweise die Methode getQuality() einen entsprechenden Wert, der die Gültigkeit respektive Ungültigkeit darstellt.

In einer bevorzugten Ausführungsform der Erfindung weist das Ereignisobjekt 1 Alarminformationen 8 auf, das heisst, ein Mittel zu einer Repräsentation und einer Behandlung von Alarmsituationen. Dadurch ist ein Verhalten im Alarmfall in einem Ereignisobjekt 1, welches ein Alarmereignis darstellt, selber codiert, und nicht im umgebenden System. Alarmbezogene Informationen sind beispielsweise eine Alarmpriorität und ein Verhalten im Alarmfall. Eine Alarmpriorität oder Wichtigkeit eines Ereignisses wird beispielsweise auf einer Skala von 1 bis 1000 codiert und mit der Methode getPriority() ausgelesen. Ein Verhalten im Alarmfall bezeichnet beispielsweise, ob ein Alarm quittiert werden muss, und ob ein Name eines Quittierenden gespeichert wird. Dies wird beispielsweise mit den Methoden acknowledgementRequired() und acknowledge(myName) bewerkstelligt. Ein weiteres Verhalten im Alarmfall beschreibt beispielsweise, was geschieht, wenn der Alarm nach einer gewissen Zeit nicht quittiert wird, oder was im Falle eines Verschwindens des Alarmzustands geschehen soll. Im letzten Fall werden beispielsweise keine Daten oder nur die Zeit des Alarms oder auch ein Teil der Messdaten 12 gespeichert.

### Bezugszeichenliste

- 1: Messereignisobjekt, Ereignisobjekt
- 2: Speichermittel
- 3: Dekompressionsmittel, DECMPR
- 4: Interpolationsmittel, INTERP
- 5: Visualisierungsmittel, VIS
- 6: Gültigkeitsinformation, VALINF,
- 7: Sprachinformation, LNGINF
- 8: Alarminformation, ALMINF
- 11: Erzeuger
- 12: Messdaten
- 13: Speicherdaten
- 14: Kontextdaten
- 15: Empfänger, Rx
- 16: Übermittlung

## Patentansprüche

1. Verfahren zur Repräsentation eines Messereignisses eines Leitsystems **dadurch gekennzeichnet, dass** ein Ereignisobjekt (1) im Sinne einer Objektorientierten Programmierung erzeugt wird, und
das Ereignisobjekt (1) Messdaten (12) des Messereignisses speichert, verarbeitet und weitergibt.

2. Verfahren gemäss Anspruch 1, **dadurch gekennzeichnet, dass** bei der Verarbeitung die Messdaten (12) durch das Ereignisobjekt (1) dekomprimiert werden.

3. Verfahren gemäss Anspruch 1, **dadurch gekennzeichnet, dass** bei der Weitergabe die Messdaten (12) durch das Ereignisobjekt (1) interpoliert werden und eine von einem Empfänger (15) der Messdaten (12) vorgegebene Auflösung aufweisen.

4. Verfahren gemäss Anspruch 1, **dadurch gekennzeichnet, dass** bei der Weitergabe zumindest ein Teil der Messdaten (12) durch das Ereignisobjekt (1) auf einer Benutzeranzeige dargestellt werden.

5. Verfahren gemäss Anspruch 1, **dadurch gekennzeichnet, dass** bei der Weitergabe zumindest ein Teil der Messdaten (12) durch das Ereignisobjekt (1) an eine Datei angefügt wird.

6. Verfahren gemäss Anspruch 1, **dadurch gekennzeichnet, dass** bei einer Ausgabe von Daten durch das Ereignisobjekt (1) die ausgegebenen Daten anhand sprachspezifischer Informationen modifiziert werden.

7. Computerprogrammprodukt zur Repräsentation eines Messereignisses eines Leitsystems, **dadurch gekennzeichnet,**
**dass** das Computerprogrammprodukt Mittel zur Erzeugung eines Ereignisobjekts (1) im Sinne einer objektorientierten Programmierung aufweist, wobei das Ereignisobjekt (1) Mittel (2) zur Speicherung von Messdaten (12) des Messereignisses und Mittel (3,4,5) zur Verarbeitung und Weitergabe dieser Messdaten (12) aufweist.

8. Computerprogrammprodukt gemäss Anspruch 6, **dadurch gekennzeichnet, dass** das erzeugte Ereignisobjekt (1) Mittel (8) zu einer Repräsentation und einer Behandlung von Alarmsituationen aufweist.

9. Computerprogrammprodukt gemäss Anspruch 6, **dadurch gekennzeichnet, dass** das erzeugte Ereignisobjekt (1) Mittel (6) zu einer Repräsentation und Verarbeitung einer Gültigkeit der Messdaten (12) aufweist.
